# EUROPÄISCHE PATENTANMELDUNG

(11) **EP 3 511 383 A1**
(43) Veröffentlichungstag der Anmeldung: **17.07.2019**
(21) Anmeldenummer: 18151968.7
(22) Anmeldetag: 16.01.2018
(51) Int. Cl.: C09D 175/04, C09D 201/10, C08G 77/46

(54) **EINKOMPONENTEN-BESCHICHTUNGSSYSTEME**

(71) Anmelder: Bergolin GmbH & Co. KG, 27711 Osterholz-Scharmbeck (DE)
(72) Erfinder: Kaune, Martin, 26125 Oldenburg (DE)
(74) Vertreter: Meissner Bolte Partnerschaft mbB

(57) **Zusammenfassung**

Die Erfindung betrifft eine feuchtigkeitshärtende Zusammensetzung, umfassend mindestens zwei unterschiedliche Polyurethan-Präpolymere A und B mit jeweils mindestens zwei silanfunktionellen Endgruppen, wobei das Präpolymer A ein durchschnittliches Molekulargewicht von 200 bis 2500 g/mol aufweist und das Präpolymer B ein durchschnittliches Molekulargewicht von 200 bis 1500 g/mol aufweist. Darüber hinaus betrifft die Erfindung auch Verwendungen einer solchen Zusammensetzung als Einkomponentensystem und Formkörper, die mit der Zusammensetzung beschichtet sind.

## Beschreibung

Die vorliegende Erfindung betrifft feuchtigkeitshärtende Zusammensetzungen und deren Verwendung als Einkomponentensysteme.

Lackierungen spielen eine große Rolle beim Schutz von Nutzgegenständen und Bauwerken vor äußeren Einflüssen. In der Regel kommen für verschiedene Untergründe, wie z. B. Holz, Metall, Glas, Beton oder verschiedene Kunststoffe, auf den jeweiligen Untergrund abgestimmte Beschichtungsprodukte zum Einsatz. Insbesondere wird für die Lackierungen zwischen fasergebundenen Untergründen (wie Holz oder daraus hergestellten Gütern, wie Papier, Holzfaserplatten, Spanplatten, WPC Faserzementplatten, Faserverbundwerkstoffen, GFK, CFK und Naturfasern) und amorphen Stoffen (wie Glas, Metall und Beton) unterschieden.

Allen Lackierungen ist gemein, dass während des Herstellungsprozesses die Anwesenheit von Wasser für den Beschichtungsprozess oder die anschließenden Schutzeigenschaften von zentraler Bedeutung ist. So stellt die Holzfeuchte für die Penetration des Beschichtungsstoffes eine Barriere dar und kann bei einem anschließenden wärmegeführten Prozessschritt sogar zu Problemen hinsichtlich von Blasenbildung führen. Bei Betonuntergründen und daraus hergestellten Faserzementplatten kann es ähnliche Probleme mit der z. B. in Poren vorliegenden Feuchtigkeit geben. Bei Metalluntergründen hingegen muss, z. B. nach dem Vorbehandeln durch Sandstrahlen und insbesondere im Freien (z. B. beim Brückenbau) auf den Taupunkt geachtet werden, da es ansonsten bedingt durch Tauwasser auf der Oberfläche zu Roststellen und daraus resultierender Haftungsminderung kommen kann. Auch bei Glas- oder Kohlefaser-basierten Faserverbundwerkstoffen ist es wichtig, Feuchtigkeit von den Fasern fern zu halten, da diese ein Vielfaches an Feuchtigkeit aufnehmen können. Durch eine exzessive Aufnahme von Feuchtigkeit wird die Stabilität der aus den Werkstoffen hergestellten Bauwerke, wie z. B. Rotorblättern für Windenergieanlagen, verringert.

Allen zuvor genannten Untergründen ist gemein, dass diese derzeit üblicherweise durch Mehrschichtaufbauten geschützt werden, welche speziell auf den Untergrund und die gewünschte Schutzeigenschaft abgestimmt werden müssen und aus mehreren Schichtmaterialien bestehen. Je nach Untergrundvorbehandlung und Schutzklasse werden die unterschiedlichsten Harzgrundstoffe, Füllstoffe, Lösungsmittel und Additive verwendet. Die Harzgrundstoffe für Beschichtungsmaterialien können grob in zwei Klassen unterteilt werden, nämlich einerseits in einkomponentige (1K) Beschichtungsstoffe, welche rein physikalisch trocknen oder verzögert chemisch härten, und andererseits in zweikomponentige (2K) reaktive Beschichtungsstoffe.

Ein wesentlicher Nachteil heutiger einkomponentiger Beschichtungsstoffe besteht in ihrer zumeist langen Aushärtungszeit von mehreren Stunden bis Tagen zur Ausbildung der gewünschten Schutzeigenschaften. Beispiele solcher einkomponentigen Beschichtungsstoffe sind unter anderem Alkydharze und physikalisch trocknende Acrylatharze. Ein weiterer deutlicher Nachteil dieser Materialien ist, dass sie als Lösungspolymer fast ausschließlich in organischem Lösungsmittel gelöst verwendet werden und sie daher ein entsprechend hohes Molekulargewicht aufweisen müssen, um als getrocknete Beschichtung einen adäquaten Film zu bilden. Wasserverdünnbare Varianten könnten zwar durch die Zugabe von Emulgatoren erzielt werden, diese Emulgatoren können jedoch einen negativen Einfluss auf die Wasserbeständigkeit der erzeugten Beschichtung haben. Darüber hinaus sind die chemischen Beständigkeiten nur bedingt steuerbar und ausgeprägt.

Als Alternative werden derzeit feuchtigkeitshärtende, silanfunktionelle Polymere als Klebstoffe, Dichtstoffe und Beschichtungen eingesetzt. Sie stellen insbesondere aus toxikologischer Sicht eine bevorzugte Alternative dar, weil sie frei von Isocyanatgruppen sind. Wie z. B. in EP 2 336 210 A1 beschrieben, können die Polymere mit unterschiedlichen feuchtigkeitsreaktiven Silangruppen versehen sein, deren Reaktivität die Aushärtungseigenschaften der Beschichtungen bestimmt. Auch die bislang bekannten auf silanfunktionellen Polymeren basierenden Beschichtungen haben jedoch den Nachteil, dass sie spezifisch an den zu beschichtenden Untergrund angepasst werden müssen. So sind Zusammensetzungen, die auf Faserverbundwerkstoffe abgestimmt sind, in der Regel vollkommen ungeeignet, um auf Metalluntergründen eingesetzt zu werden. Dies führt nicht nur dazu, dass eine aufwändige Auswahl der richtigen Beschichtung durchgeführt werden muss, sondern auch dazu, dass Produkte, die sowohl holzfaserhaltige als auch metallische Flächen aufweisen, nicht mit hinreichender Qualität mit nur einem Beschichtungsmittel beschichtet werden können.

Es besteht somit ein Bedarf an Beschichtungszusammensetzungen mit einer sinnvollen Reaktionszeit, die nicht auf Lösungsmittel angewiesen sind, die Schwankungen in der Luftfeuchtigkeit während des Auftrags und Aushärtens tolerieren und die darüber hinaus flexibel auf verschiedenen Untergründen eingesetzt werden können.

### Beschreibung

Gelöst wird diese Aufgabe durch eine feuchtigkeitshärtende Zusammensetzung mit den Merkmalen von Anspruch 1.

In einem ersten Aspekt betrifft die Erfindung daher eine feuchtigkeitshärtende Zusammensetzung, die mindestens zwei unterschiedliche Polyurethan-Präpolymere A und B mit jeweils mindestens zwei silanfunktionellen Endgruppen umfasst, wobei das Präpolymer A ein durchschnittliches Molekulargewicht von 200 bis 2500 g/mol aufweist und das Präpolymer B ein durchschnittliches Molekulargewicht von 200 bis 1500 g/mol aufweist. Überraschenderweise wurde gefunden, dass eine solche Mischung zweier silanfunktioneller Präpolymere im Vergleich zu den Einzelbestandteilen der Mischung eine deutlich verbesserte Haftung auf verschiedenen Untergründen bewirkt.

Die mittels der erfindungsgemäßen Zusammensetzungen hergestellten Beschichtungen sind deutlich widerstandsfähiger als Beschichtungen, die mit den heute üblichen Zweikomponentensystemen auf Epoxid- und/ oder Polyurethanbasis erzeugt wurden. Diese Verbesserung hat insbesondere eine größere Widerstandsfähigkeit gegenüber Witterungseinflüssen zur Folge, beispielsweise gegenüber UV-Licht, Wassereintritt, Korrosion, Erosion durch Flüssigkeiten (wie Regen- oder Meerwasser) und Erosion durch Feststoffe (wie Sandstaub, Eis oder Hagel). Gleichzeitig weisen die erfindungsgemäß hergestellten Beschichtungen eine exzellente Haftung auf diversen Untergründen, wie Holz, Beton, Metallen (z. B. Stahl, Aluminium oder Kupfer), Glas und Papier auf. Schließlich härten die Beschichtungssysteme auch mit einer für die Verarbeitung passenden Geschwindigkeit aus. Während jedes Präpolymer für sich auf einigen der Untergründe jeweils keine gute Haftung aufwies, wurde überraschenderweise festgestellt, dass die erfindungsgemäße Mischung der Präpolymere A und B sehr gute Haftungseigenschaften auf den unterschiedlichen Substraten aufwies. Diese herausragende Haftung blieb auch nach einer Feuchtigkeitsbelastung, wie z. B. einem Kondenswasser- oder Salzsprühtest erhalten.

Eine "feuchtigkeitshärtende" Zusammensetzung ist eine Zusammensetzung, die durch Reaktion mit Wasser aushärtet. Das Wasser muss nicht in der Zusammensetzung enthalten sein, sondern kann z. B. von einem feuchten Untergrund oder durch die Luftfeuchtigkeit bereitgestellt werden.

Die Zusammensetzung umfasst mindestens zwei unterschiedliche Polyurethan-Präpolymere A und B mit jeweils mindestens zwei silanfunktionellen Endgruppen. Durch die Mischung der beiden Präpolymere ergibt sich überraschenderweise eine Zusammensetzung, die sowohl für die Beschichtung fasergebundener Untergründe, als auch für die Beschichtung amorpher bzw. glatter Untergründe geeignet ist.

Fasergebundene Untergründe sind z. B. aus Holz oder aus daraus hergestelltem Material (wie Papier, Holzfasern, Span, Holz-Polymer-Werkstoff (WPC), Faserverbundwerkstoff), aus glasfaserverstärktem Kunststoff (GFK), kohlenstofffaserverstärktem Kunststoff (CFK) oder anderen Naturfasern (wie Hanf, Sisal, Zementfasern) oder daraus hergestelltem Material. Untergründe aus amorphen Stoffen sind z. B. aus Glas, Metall oder Beton. Auch für den Auftrag auf Kunststoffsubstrate sind die Zusammensetzungen geeignet.

Die Präpolymere A und B weisen bevorzugt unterschiedliche durchschnittliche Molekulargewichte (Molekulargewichtsmittel Mn) auf. Das Mn des Präpolymers A ist dabei bevorzugt größer als das Mn des Präpolymers B. Das Präpolymer A kann ein durchschnittliches Molekulargewicht von 200 g/mol bis 2500 g/mol aufweisen, vorzugsweise von 300 g/mol bis 1500 g/mol, besonders bevorzugt von 500 g/mol bis 800 g/mol. Das Präpolymer B kann ein durchschnittliches Molekulargewicht von 200 g/mol bis 1500 g/mol aufweisen, vorzugsweise 300 g/mol bis 1000 g/mol, besonders bevorzugt 300 g/mol bis 500 g/mol. So kann z. B. eine erfindungsgemäße Zusammensetzung ein Präpolymer A umfassen, das ein durchschnittliches Molekulargewicht von 300 g/mol bis 1500 g/mol aufweist, und ein Präpolymer B umfassen, das ein durchschnittliches Molekulargewicht von 300 g/mol bis 1000 g/mol aufweist. In einer bevorzugten Ausführungsform weist das Präpolymer A ein durchschnittliches Molekulargewicht von 500 g/mol bis 800 g/mol und das Präpolymer B ein durchschnittliches Molekulargewicht von 300 g/mol bis 500 g/mol auf.

Die Präpolymere A und B unterscheiden sich voneinander, d. h. sie weisen unterschiedliche Strukturen auf. Dabei können sich die Präpolymere z. B. durch ihren Polymerisationsgrad, ihre Länge und/oder durch die Anzahl oder Art der funktionellen Gruppen unterscheiden. Fachleute sind in der Lage, geeignete Präpolymere herzustellen. Darüber hinaus sind geeignete Präpolymere auch im Handel erhältlich. So ist ein geeignetes Präpolymer A z. B. Geniosil® XT 50 (Wacker). Ein geeignetes Präpolymer B ist z. B. ausgewählt aus der Gruppe bestehend aus Vestanat® EP-MF 201 und Vestanat® EP-MF 95 (Evonik).

Die Präpolymere A und B sind Polyurethan-Präpolymere mit jeweils mindestens zwei silanfunktionellen Endgruppen. Der Begriff "Polyurethan-Präpolymer" umfasst sämtliche Polymere, die aus einer Polyadditionsreaktion von Di- und/oder Polyolen mit Polyisocyanaten entstehen. Bevorzugte Polyurethan-Präpolymere umfassen mindestens zwei Gruppen, die ausgewählt sind aus der Gruppe bestehend aus -NH-CO-NH-, -NH-CO-S- und -NH-CO-O-; vorzugsweise -NH-CO-O-. Die Polyurethan-Präpolymere können z. B. ausgewählt sein aus der Gruppe bestehend aus Polyether-Polyurethanen, Polyester-Polyurethanen, Polyether-Polyharnstoffen, Polyharnstoffen, Polyester-Polyharnstoffen, Polyisocyanuraten und Polycarbodiimiden. In besonders bevorzugten Ausführungsformen ist mindestens das Präpolymer A, vorzugsweise auch das Präpolymer B, ein Polyether-Polyurethan.

Beide Präpolymere umfassen jeweils mindestens zwei silanfunktionelle Endgruppen. Der Begriff "silanfunktionell" bezeichnet Silangruppen, welche die Eigenschaft haben, bei Kontakt mit Feuchtigkeit zu hydrolysieren. Durch nachfolgende Kondensationsreaktionen bilden sich Polymere, deren Wiederholungseinheiten über -Si-O-Si-Verbindungen verbunden sind. "Silangruppen" im Sinne der Erfindung sind Organoalkoxysilane, in denen - jeweils über eine Si-O-Bindung - drei Alkoxygruppen an einem gemeinsamen Siliciumatom gebunden sind. Die silanfunktionellen Endgruppen der Polyurethan-Präpolymere A und B weisen somit vorzugsweise die Formel (I)

-X-CH₂-Si-(O-R¹)₃ (I)

auf, wobei
X für -NH-CO-NH-, -NH-CO-S- oder-NH-CO-O- steht; und
R¹ für eine Ethyl- oder Methylgruppe steht.

Die Präpolymere können lineare Strukturen oder Unterstrukturen aufweisen, die an beiden Enden eine silanfunktionelle Gruppe der Formel (I) umfasst. In dieser Ausführungsform weist das Präpolymer die Formel (II)

(R²-O)₃-Si-CH₂-X-R³-X-CH₂-Si-(O-R¹)₃ (II)

auf, wobei jeweils
X für -NH-CO-NH-, -NH-CO-S- oder -NH-CO-O- steht;
R¹ und R² unabhängig voneinander für eine Ethyl- oder Methylgruppe stehen; und
R³ eine polymere Verbindung ist, vorzugsweise ein Polyether, Polyester, Polycaprolacton, Polycarbonatdiol, Polyamin, Polythiol, Carbonsäure, Epoxid, ungesättigter Polyester, eine UV reaktive Komponente oder eine polymere Verbindung, die eine solche Verbindung umfasst.

In einer bevorzugten Ausführungsform ist das Präpolymer A ein Polyether. So kann R³ bevorzugt ein Polyether sein.

Durch geeignete Auswahl der Präpolymere kann der Fachmann die erfindungsgemäße Zusammensetzung den gewünschten Aushärtungsbedingungen anpassen. So ist es z. B. möglich, die Präpolymere so auszuwählen, dass die Zusammensetzung entweder bei Raumtemperatur (16°C bis 26°C) oder bei höheren Temperaturen aushärtet. Hierfür kann der Fachmann die Präpolymere entsprechend aus den am Markt verfügbaren Präpolymeren aussuchen. Bevorzugt ist die Zusammensetzung bei einer Temperatur von 16°C bis 26°C innerhalb von 3 h oder weniger aushärtbar.

Die Präpolymere A und B können in einem Verhältnis von 90:10 bis 10:90 vorliegen, z. B. in einem Verhältnis von etwa 55:10, 53:10, 50:10, 50:20, 50:25, 50:35, 50:45 oder 50:50. Vorzugsweise liegt das Verhältnis zwischen Präpolymer A und B von 70:10 bis 40:50, stärker bevorzugt von 60:10 bis 50:55. Während die erfindungsgemäßen Zusammensetzungen auf einer Vielzahl von Untergründen adäquat haften, können die Eigenschaften der Zusammensetzung durch Variation des Verhältnisses von Präpolymer A und B optimiert und noch stärker auf den jeweiligen Untergrund abgestimmt werden.

Die Zusammensetzung kann neben den Präpolymeren A und B weitere Präpolymere mit denselben Eigenschaften aufweisen. So kann die Zusammensetzung z. B. mindestens ein weiteres Präpolymer B2 umfassen, das sich von dem Präpolymer B unterscheidet, aber die hierin für das Präpolymer B definierten Eigenschaften aufweist, z. B. ein Molekulargewicht von 300 bis 500 g/mol. Die Zusammensetzung könnte auch mindestens ein weiteres Präpolymer A2 umfassen, das sich von dem Präpolymer A unterscheidet, aber die hierin für das Präpolymer A definierten Eigenschaften aufweist, z. B. ein Molekulargewicht von 500 bis 800 g/mol. Auch diese zusätzlichen Präpolymere sind Polyurethan-Präpolymere mit jeweils mindestens zwei silanfunktionellen Endgruppen. Durch den Zusatz weiterer Polyurethan-Präpolymere mit silanfunktionellen Endgruppen können die Zusammensetzungen noch stärker an verschiedene Beschichtungsbedingungen oder -untergründe angepasst werden. So kann das weitere Präpolymer A2 oder B2 z. B. ein Präpolymer sein, das bei erhöhten Temperaturen aushärtet (z. B. Temperaturen > 70°). Durch Hinzufügen eines solchen Präpolymers kann eine Zusammensetzung erzeugt werden, die bei erhöhten Temperaturen aushärtet. In einer Ausführungsform, die insbesondere für die Beschichtung von amorphen Untergrundmaterialien geeignet ist, kann die Zusammensetzung somit mindestens ein weiteres Präpolymer A2 oder B2, vorzugsweise B2, umfassen, das bei Temperaturen > 70°C aushärtet.

Die Präpolymere A, B und A2 oder B2 (vorzugsweise B2) können in Konzentrationen von z. B. 30-40% (Präpolymer A), 15-40% (Präpolymer B) bzw. 25-50% (Präpolymer B2), bezogen auf den Anteil der Präpolymere A, B und A2 oder B2 an der Zusammensetzung, vorliegen.

Obwohl das Mischen mit Lösungsmitteln erfindungsgemäß nicht erforderlich ist, kann die erfindungsgemäße Zusammensetzung für verschiedene Anwendungszwecke auch Lösungsmittel enthalten. Hierdurch kommt es zu keinerlei negativen Folgen für die Widerstandskraft der mit den Zusammensetzungen erzeugten Beschichtungen. Es ist jedoch bevorzugt, dass die Zusammensetzung kein Lösungsmittel enthält. Da die Umgebungs- oder Untergrundsfeuchte ausreichend ist, um die erfindungsgemäße Zusammensetzung auszuhärten, ist es auch nicht erforderlich, der Zusammensetzung Wasser zuzusetzen.

Für einen besonders dichten Auftrag kann die erfindungsgemäße Zusammensetzung einen hohen Festkörperanteil umfassen, da sie nicht auf den Zusatz von Lösungsmitteln angewiesen ist. So kann die Zusammensetzung einen Festkörperanteil von 90% oder mehr aufweisen, vorzugsweise von 95% oder mehr, stärker bevorzugt 98% oder mehr.

Die Zusammensetzung kann ferner mindestens ein Aminosilan als Komponente ,C' umfassen. Aminosilane sind Silane, die eine Aminogruppe am organischen Rest einer silanfunktionellen Endgruppe tragen. Die Aminogruppe kann sich an verschiedenen Stellungen zum Siliciumatom befinden, z. B. an alpha- oder gamma-Position. Das Aminosilan umfasst somit eine primäre Aminogruppe. Geeignete Aminosilane sind Fachleuten bekannt und können z. B. ausgewählt sein aus der Gruppe bestehend aus 3-Aminopropyltri-ethoxysilan, 3-Aminopropyltri-methoxysilan, diamino-funktionelles Propyltri-methoxysilan und triamino-funktionelles Propyltri-methoxysilan. Das Aminosilan ist vorzugsweise 3-Aminopropyltri-ethoxysilan.

Die Zusammensetzung kann auch Epoxysilane, Mercaptosilane, Vinylsilane und/oder isocyanatofunktionelle Silane umfassen. Das zusätzliche Silan sollte vorzugsweise eine weitere funktionelle Gruppe enthalten, die mitvernetzend ist, d. h. ein Netzwerk mit den Präpolymeren A und B und/oder dem Aminosilan eingeht.

Die Zusammensetzung kann auch einen silanfunktionellen Kreuzvernetzer als Komponente ,D' umfassen. Geeignete Kreuzvernetzer sind Fachleuten ebenfalls bekannt.

Die Zusammensetzungen können ferner Hydroxyl- (OH-), Amin- (NH-), Thio- (SH-), Epoxy- (EP-), Melaminharze (MF), ungesättigte Polyester (UP) oder spezielle UVhärtende Komponenten umfassen. Die vorstehend genannten Verbindungen sollten jeweils Endgruppen aufweisen, die eine Reaktion und Kreuzvernetzung mit den erfindungsgemäßen Präpolymeren erlauben. Auch Mischungen und/oder Präpolymere der vorstehend genannten Verbindungen können verwendet werden.

Die Zusammensetzungen können Katalysatoren enthalten. Der Katalysator kann entsprechend der gewünschten Reaktivität der Zusammensetzung gewählt werden. Geeignete Katalysatoren sind z. B. metallorganische Katalysatoren. Der Katalysator kann z. B. ausgewählt sein aus der Gruppe bestehend aus Dioctylzinndilaurat (DOTL) (Tib Kat 216), Wismutcarboxylat (Tib Kat 716), Zinkoktoat (Tib Kat 620) und dergleichen.

Die Zusammensetzungen können auch Pigmentierungsmittel enthalten. Hierdurch können die gewünschten optischen Eigenschaften der Zusammensetzung eingestellt werden. So kann die Zusammensetzung z. B. für bestimmte Anwendungszwecke eingefärbt werden. Die Zusammensetzungen sind auch in pigmentierter, farbgebender Form verarbeitungsfähig, können aber auch in Klarlacken verwendet werden. Ferner können die Zusammensetzungen in unterschiedlichen Mattierungsgraden verwendet werden.

Darüber hinaus können die Zusammensetzungen funktionalisierte Füllstoffe enthalten. Der Fachmann ist in der Lage, geeignete Füllstoffe aufzufinden. Die Füllstoffe können rezepturabhängig und gezielt auf chemisch/physikalische Einflussgrößen im Beschichtungsmaterial einwirken und damit zur Erzielung der jeweiligen gewünschten Eigenschaft beitragen.

Zusätzlich besteht die Möglichkeit, Asparaginsäureester und/oder feuchtigkeitshärtende Isocyanate in die Zusammensetzung aufzunehmen. Hierdurch werden gezielt weitere Eigenschaften der resultierenden Produkte gesteuert.

In einem zweiten Aspekt betrifft die Erfindung die Verwendung der erfindungsgemäßen Zusammensetzung als Einkomponentensystem, insbesondere als einkomponentiges Beschichtungssystem. Wie oben bereits erläutert, weisen Einkomponentensysteme gegenüber Zweikomponentensystemen eine Reihe von Vorteilen auf. Da die erfindungsgemäßen Zusammensetzungen feuchtigkeitshärtend sind, ist das Zusetzen einer zweiten Komponente nicht erforderlich.

In einem verwandten Aspekt betrifft die Erfindung die Verwendung der Zusammensetzung als Inmouldcoating. Diese Verwendung und deren Vorteile sind an anderer Stelle hierin näher beschrieben.

In einem dritten Aspekt betrifft die Erfindung einen beschichteten Formkörper, der durch Auftragen der erfindungsgemäßen Zusammensetzung auf ein Substrat und Aushärtenlassen der Zusammensetzung mit Feuchtigkeit herstellbar ist. Wie oben erläutert, ist die Zusammensetzung für die Beschichtung von unterschiedlichen Substraten geeignet. Das Substrat kann z. B. ein fasergebundenes Substrat (Untergrund) sein oder ein amorphes Substrat. Das Substrat kann Abschnitte mit verschiedenen Oberflächeneigenschaften aufweisen, z. B. glatte und weniger glatte Abschnitte. Das Substrat ist vorzugsweise ein Holz-, Beton-, Stahl- und/oder Eisensubstrat. In einer Ausführungsform weist der Formkörper eine Inmould-Beschichtung mit einer erfindungsgemäßen Zusammensetzung auf. Inmould-Beschichtungen sind an anderer Stelle hierin erläutert.

In einem vierten Aspekt betrifft die Erfindung ein Verfahren zur Herstellung eines beschichteten Formkörpers, Schritte umfassend, bei denen man a) eine Schicht der erfindungsgemäßen Zusammensetzung auf ein feuchtes Substrat aufträgt oder auf ein Substrat bei einer Umgebungs-Luftfeuchtigkeit von mindestens 5% aufträgt; und b) die Schicht aushärten lässt.

Das Substrat kann vor dem Auftrag in Schritt a) befeuchtet werden oder eine inhärente Feuchte aufweisen, wie es z. B. bei Holz in der Regel der Fall ist. Die Feuchte innerhalb des Holzes kann für die Aushärtung bereits ausreichend sein. Geeignete Substrate sind bereits an anderer Stelle hierin genannt und umfassen Substrate aus fasergebundenem und/oder amorphen Material.

Die Schicht kann in Schritt a) z. B. mittels druckloser Auftragsverfahren oder durch Druckimprägnierung aufgetragen werden. Drucklose Auftragsverfahren sind z. B. ausgewählt aus der Gruppe bestehend aus Streichen, Rollen, Spritzlackieren (auch automatisiert), das Tauchen in Kalt- und/oder Heißbäder.

Es ist ebenfalls denkbar, die Zusammensetzung in Schritt a) als *"Inmouldcoating"* aufzutragen. Dabei wird die Zusammensetzung bereits während des Herstellungsprozesses (von z. B. Spanplatten oder Zementplatten) in das Substrat eingebracht. Die Herstellung von z. B. Span- oder Zementplatten erfolgt im sogenannten kontinuierlichen Endlospressen oder Etagen-/Mehretagenpressen. Durch Verwendung der Zusammensetzung als *"Inmouldcoating*" können mit den erfindungsgemäßen Beschichtungszusammensetzungen Spanplatten, Flachpressplatten, OSB-Platten, Holzzementplatten, Multiplex-Sperrholz, Funierholz, MDF (Mitteldichte Faserplatten), HDF (Hochdichte Faserplatten), Faserzementplatten und dergleichen hergestellt werden. Dabei kann, im Gegensatz zu nachträglichem Lackieren, auf das Schleifen der Presshaut bzw. Zementhaut verzichtet werden. Die erfindungsgemäße Beschichtungszusammensetzung kann dabei die beim Beschichtungsprozess anfallende Feuchtigkeit katalytisch nutzen.

Die erfindungsgemäß hergestellten *Inmould*-Produkte weisen die folgenden Vorteile auf:
- Kostenreduzierung durch Verkürzung oder Wegfall einzelner anschließender Prozessschritte, z. B. des Trocknens, Schleifens, Entstaubens und Lackierens
- Sehr gute Haftung zwischen Formoberfläche und Lack
- Die Qualität und Formbeschaffenheit der Lackoberfläche sind auf den Kundenwunsch abstimmbar
- Höhere Designfreiheit bei der Formgebung des Bauteils
- Möglichkeit der Systemanpassung an verschiedene Basismaterialien (Plattentypen und Grundstoffe) und Verfahrensweisen
- Das Verfahren ist ideal für die Verarbeitung von unterschiedlichen Füllstoffen auf Basis von Holz-, Holzschnitt-, Holzschnitzelmehl-, Glas,- Kohle,-, Basalt, Sisal-, Hanf- oder Zementfasern geeignet
- Realisierung kurzer Reaktions- und Prozesszeiten

Weitere Prozessvorteile sind:
- Eine Rückseitenlackierung entfällt, da von beiden Seiten aus der gleiche Prozess gefahren werden kann, sogar in unterschiedlichen Qualitäten
- Einfache Prozessführung bei ggf. Mehrschichtaufbauten
- Aufwendige Vorbehandlungs- und Zwischenbeschichtungsschritte für Mehrschichtlackierungen entfallen
- Einfache Einhaltung von Reduzierungsplänen für VOC (*Volatile Organic Compounds*), da die erfindungsgemäßen Materialien einen Festkörper von bis zu 100% besitzen können
- Es lassen sich ggf. auch mehrfach gekrümmte Bauteile auf einfache Weise lackieren und herstellen, z. B. Türen, Laminat, Spezialformbau

Zur Aushärtung der erfindungsgemäßen Zusammensetzung in Schritt b) ist eine Umgebungs-Luftfeuchtigkeit (relative Luftfeuchtigkeit) von mindestens 5% bereits ausreichend. Die Luftfeuchtigkeit kann jedoch auch deutlich höher sein. So kann die Luftfeuchtigkeit z. B. von 5% bis 100% betragen, vorzugsweise von 10% bis 80%.

Schritt b) wird je nach Auswahl der Präpolymere bei Raumtemperatur (von 16°C bis 26°C) oder bei höheren Temperaturen durchgeführt. Die Aushärtungstemperatur kann auf den Verwendungszweck durch Auswahl der geeigneten Präpolymere abgestimmt werden. Härtet die Zusammensetzung bereits bei Raumtemperatur aus, so wird sie bis zur Anwendung unter Feuchtigkeitsausschluss gelagert.

Das Aushärten der Schicht in Schritt b) wird z. B. 15 h oder weniger dauern, vorzugsweise 8 h oder weniger, noch stärker bevorzugt 2 h oder weniger.

In einem fünften Aspekt betrifft die Erfindung eine ausgehärtete Beschichtung, erhalten oder erhältlich aus der Aushärtung einer erfindungsgemäßen Zusammensetzung mit Feuchtigkeit.

### Beispiele

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

### Beispiel 1: Beschichtung eines Betonsubstrats

Mit den hierin beschriebenen Beschichtungsmitteln lassen sich Betonsubstrate mit einer funktionellen und/oder dekorativen Schicht ausstatten. Die erfindungsgemäßen Beschichtungsformulierungen aus silanurethanisierten-Präpolymeren wurden mit zwei derzeit üblichen Beschichtungsmaterialien aus dem Betonbau verglichen.

Die verschiedenen Beschichtungszusammensetzungen setzten sich zusammen wie folgt:

| **Rohstoffe** | **Epoxid-Betonspachtel** | **Standardformulierung 2K*** | **Silanurethan-Beschichtungsstoff VP 65** | **Silanurethan-Beschichtungsstoff VP 65/10** |
|---|---|---|---|---|
| **Komponente A** | | | | |
| [Gew.-T.] | | | | |
| Epoxidharz A/F EP-Wert: 0,52 | 25,00 | --- | --- | --- |
| EP-Reaktivverdünner | 6,00 | --- | --- | --- |
| Asparaginsäureester | --- | 60,00 | - | --- |
| Silanurethan-Präpolymer A (Geniosil®XT 50 (Wacker)) | --- | --- | 65,00 | 55,00 |
| Silan urethan-Präpolymer B** | --- | --- | --- | 10,00 |
| Aminosilan (3-Aminopropyltri-ethoxysilan) | --- | --- | 1,40 | 1,40 |
| Hydriertes Ricinusöl (Thixotropierungsmittel) | --- | 0,80 | 1,50 | 0,80 |
| Additive*** | 1,00 | 2,70 | 3,80 | 3,80 |
| Pigmentverkollerung | 2,00 | 8,00 | 8,00 | 8,00 |
| Füllstoffpaket**** | 64,00 | 25,5 | 16,80 | 16,80 |
| Silikatisches Mattierungsmittel | 2,00 | 3,00 | 3,00 | 3,00 |
| Katalysator (Dioctylzinndilaurat (DOTL) (Tib Kat 216)) | --- | 0,2 | 0,5 | 0,5 |
| **Gesamt** | 100,00 | 100,00 | 100,00 | 100,00 |
| | | | | |

| **Komponente B** | | | | |
|---|---|---|---|---|
| [Gew.-T.] | | | | |
| Isocyanatkomponente mit NCO-% = 23 | --- | 100,00 | Nicht notwendig | Nicht notwendig |
| Aminkomponente Aminäquivalent: 180 | 100,00 | --- | | |
| **Gesamt** | 100,00 | 100,00 | | |

| | | | | |
|---|---|---|---|---|
| * Beschichtung auf Basis eines Asparaginsäureesters ** Vestanat® EP-MF 201 (Evonik) *** Entschäumer, Dispergieradditiv Lichtschutzadditiv Verlaufsadditiv **** Bariumsulfat, Calciumcarbonat,Talkum | | | | |

Die Beschichtungszusammensetzungen wurden, wie in der folgenden Tabelle und in Beispiel 2 beschrieben, in einer Schichtdicke von 300 bis 700 µm auf ein Betonsubstrat (Standard-Waschbetonplatte der Größe 30 cm x 30 cm) aufgetragen. Die Oberfläche wies einen für das Substrat typischen oberflächlichen Zementschleier mit einer insgesamt feinporigen Oberfläche auf.

| | | | | |
|---|---|---|---|---|
| Mischungsverhältnis | 100:20 | 100:70 | --- | --- |
| Viskosität Mischung (64/100) [mPas] | 8000 | 5100 | 6800 | 6500 |
| Bemerkung | Muss mit PUR-Decklack überlackiert werden (siehe Rezeptur Asparaginsäureester basierte Beschichtung) | Überarbeitung mit sich selbst innerhalb von mindestens 40 min | Überarbeitung Nass in Nass | Überarbeitung Nass in Nass |

Schließlich wurden die Haftungs-, Trocknungs- und Dehnungseigenschaften der finalen Beschichtung bestimmt:
Dabei wurde die Viskosität nach DIN EN ISO 2555 bei 20 °C mit der Spindel 4 bei 64 Umdrehungen pro Minute bestimmt.

Die Haftung wurde nach DIN EN ISO 4624 ermittelt, wobei die zu prüfende Oberfläche angeraut, anschließend ein Stempel definierter Fläche aufgeklebt und nach 24 h Härtung von der Oberfläche abgezogen wurde. Anschließend erfolgte eine Angabe der Haftung in MPa und mittels des Bruchbilds.

Die Trocknung wurde nach DIN 53150 bestimmt.

Die statische Rissüberbrückung wurde im Biegeversuch nach DIN EN 1062-7:2004, Anhang C.2 bei Raumtemperatur mit hergestellten Grundkörpern nach DIN EN 1062-7:2004 bestimmt. Dabei erfolgte der Versuch als verformungsgesteuerter 3-Punkt-Biegeversuch mit einer Rissgeschwindigkeit von 0,05 mm/min entsprechend der Belastungsanordnung im Bild C.6 der Norm 1062-7:2004, Anhang C. Während des Versuchs wurde die Rissöffnung an der Prüfplattenoberfläche kontinuierlich gemessen.

| | | | | |
|---|---|---|---|---|
| **Haftung auf Beton [MPa]** | 1,09 | 3,49 | 3,76 | 6,27 |
| **Bruchbild** | 100% Adhäsionsbruch, Beton/ Beschichtung | 100% Adhäsionsbruch, Beton/ Beschichtung | 90% Adhäsionsbruch Beton/ Beschichtung 10% Kohäsionsbruch Beschichtung | 100% Kohäsionsbruch im Beton |
| **Trocknung [min, h]** | 6-8 | 4 | 4 | 1,5 |
| **Rissüberbrückung Dehnung [µm], bei TSd: ca. 500 µm** | < 0,1 mm | 0,3 mm | 0,3 mm | 0,2 mm |

Es ist deutlich zu erkennen, dass die erfindungsgemäß aus zwei silanfunktionellen Polyurethan-Polymeren gemischte Beschichtungszusammensetzung keine weitere Härterkomponente benötigen. Trotz der fehlenden Härterkomponente wiesen die erfindungsgemäßen Materialien eine deutlich bessere Haftung auf dem Betonuntergrund auf als die Vergleichsbeschichtungen. Die Trocknungsgeschwindigkeit der erfindungsgemäßen Beschichtungsmaterialien war vergleichbar oder sogar besser als in herkömmlichen Beschichtungsmaterialien. Auch die Dehnbarkeit der hergestellten Beschichtungen war bei vergleichbarer Trockenschichtdicke gegenüber den üblichen auf Asparaginsäureestern basierenden Polyurethanbeschichtungen deutlich verbessert. Da die erfindungsgemäßen Zusammensetzungen keine zusätzliche Härterkomponente benötigen, ist die Verarbeitung der Zusammensetzungen gegenüber herkömmlichen Materialien deutlich erleichtert, da keine Topfzeiten bei der Verarbeitung zu berücksichtigen sind. So wird z. B. wesentlich einfacheres Verarbeitungsequipment benötigt, die Vorbereitungszeit reduziert und Fehlermöglichkeiten durch den Anwender deutlich reduziert.

### Beispiel 2: Beschichtungsprozess am Beispiel von Betontürmen von Windenergieanlagen

### Beschichtung (Stand der Technik):

Derzeit werden Betonbauteile von Windenergieanlagen in der Regel mittels eines Zweibis Dreischichtverfahrens mit 2-komponentigen, lösungsmittelhaltigen Beschichtungen (z. B. auf Asparaginsäureester-Basis oder Epoxid (EP)-Basis) und/oder wasserverdünnbaren Decklacken auf Polyurethan (PUR)-Basis beschichtet. Dabei werden in der Regel in einem ersten Schritt die großen Poren des Materials mit einem Silikatspachtel verschlossen. Anschließend werden die kleinen Poren mit einem EP- oder PUR-Spachtel (Porenfüller) geschlossen. Das Material wird dabei aufgerollt oder gespritzt und anschließend auf 0 zum Untergrund abgezogen. Anschließend wird nach ca. einer Stunde auf das noch frische Grundierungsmaterial der Decklack mittels einer Walze aufgerollt und anschließend mittels einer Strukturwalze konturiert oder mit einer Strukturpistole aufgespritzt.

Nachteilig an diesem herkömmlichen Verfahren ist es, dass die Haftung auf den meist sehr wassergeschwängerten und alkalischen Betonuntergründen (grüner Beton) nicht sehr gut ist, da es z. B. bei Epoxidmaterialien zur Bildung von Carbamaten kommen kann, welche die Haftungseigenschaften erfahrungsgemäß deutlich verschlechtern. Ähnlich verhält es sich bei PUR-Materialien, bei denen es zusätzlich, bedingt durch das im Beton enthaltene Wasser und durch konkurrierende Isocyanat-Reaktionen, zu einer Blasenbildung im Beschichtungsstoff kommen kann.

### Erfindungsgemäße Beschichtung:

Im Gegensatz zu den herkömmlichen Prozessen werden bei einer erfindungsgemäßen Beschichtung z. B. eines Betonturms sowohl die großen, als auch die kleinen Poren des Untergrunds allein durch das Auftragen des Einkomponenten- (1K-) Materials und anschließendes Abziehen auf 0 verschlossen. Dies kann im Gegensatz zum oben dargestellten Prozess schon mit dem eigentlichen Beschichtungsmaterial erfolgen.

Der Auftrag der Schichten kann z. B. mittels einer Strukturrolle oder Strukturpistole erfolgen. Selbstverständlich eignet sich aber auch jedes andere Roll,- Streich,- oder Spritzverfahren sowie andere Verfahren, das für die Ausbildung von glatten Flächen geeignet ist.

Die so hergestellten Flächen weisen überraschenderweise eine ausgezeichnete Frühwasserbeständigkeit auf, obwohl das Wasser als Feuchtigkeit für die Vernetzungsreaktion benötigt wird. Die Frühwasserbeständigkeit ist die Eigenschaft eines Materials, schon sehr schnell mit Wasser in Verbindung gebracht zu werden, ohne dabei Schaden oder Qualitätsverluste in Kauf nehmen zu müssen. So können selbst noch nicht vollständig ausgehärtete Flächen i.d.R. ohne die Ausbildung der üblichen Wasserflecke in den Regen gestellt werden.

Weiterhin weisen die ausgehärteten Oberflächen sowohl eine ausgezeichnete, kraftschlüssige Haftung zum Untergrund auf, als auch eine hervorragende Wetterbeständigkeit. Bedingt durch die Formulierung zeigen diese Materialien sehr gute rissüberbrückende Eigenschaften von bis zu 0,3 mm (vgl. Beispiel 1).

Die erfindungsgemäße Beschichtung weist zudem eine hervorragend wasserabweisende Oberfläche auf, was die Verschmutzung und Veralgung des beschichteten Betons stark reduziert und zudem als Antigraffitieigenschaft gewertet werden kann.

Selbstverständlich können auch alle anderen Betonuntergründe mit den erfindungsgemäßen Beschichtungszusammensetzungen beschichtet werden. So sind die erfindungsgemäßen Beschichtungszusammensetzungen z. B. insbesondere für die Beschichtung von betonbasierten Bauwerken, Brückenkonstruktionen, Tanks und Rohren geeignet.

### Beispiel 3: Beschichtung eines Stahl-/Eisensubstrats

Mit den hierin beschriebenen Beschichtungsmitteln lassen sich auch Stahl- bzw. Eisensubstrate mit einer funktionellen und/oder dekorativen Schicht ausstatten, z.B. Stahlbauwerke, wie Brücken und Stahltürme für Offshore-Windenergieanlagen. Die erfindungsgemäßen Beschichtungsformulierungen aus silanurethanisierten-Präpolymeren wurden mit einem derzeit üblichen Beschichtungsmaterial aus dem Betonbau verglichen.

Die verschiedenen Beschichtungszusammensetzungen setzten sich zusammen wie folgt:

| **Rohstoffe** | **EP-Grundierung Lösungsmittelhaltig** | **Silanurethan-Beschichtungsstoff VP 65** | **Silanurethan-Beschichtungsstoff VP 65/10** |
|---|---|---|---|
| **Komponente A** | | | |
| **[Gew.-T.]** | | | |
| Epoxidharz A/F EP-Wert: 0,52 | 26,00 | --- | --- |
| EP-Reaktivverdünner | 2,00 | --- | --- |
| Silanurethan-Präpolymer A (Geniosil®XT 50 (Wacker)) | | 35,00 | 25,00 |
| Silanurethan-Präpolymer B (Vestanat® EP-MF 201 (Evonik)) | | --- | 10,00 |
| Aminosilan | --- | 1,40 | 1,40 |
| Amidbasiertes Thixotropierungsmittel | --- | 0,80 | 0,80 |
| Additive: Entschäumer, Dispergieradditiv, Lichtschutzadditiv, Verlaufsadditiv | 1,30 | 3,80 | 3,80 |
| Pigmentverkollerung | 4,40 | 8,00 | 8,00 |
| Füllstoffpaket Bariumsulfat, Wollastonitmehl Talkum | 55,60 | 47,50 | 47,50 |
| Silikatisches Mattierungsmittel | 1,70 | 3,00 | 3,00 |
| Lösungsmittelpaket: Xylol Isobutanol Methoxypropanol | 9,00 | --- | --- |
| Katalysatoren | --- | 0,5 | 0,5 |
| Gesamt: | 100,00 | 100,00 | 100,00 |

| **Komponente B** | | | |
|---|---|---|---|
| [Gew.-T.] | | | |
| Isocyanat Komponente mit NCO-% = 23 | --- | Nicht notwendig | Nicht notwendig |
| Aminkomonente, Amin-Äquivalentgewicht: 180 | 100,00 | | |
| Gesamt | 100,00 | | |

Die Beschichtungszusammensetzungen wurden, wie in der folgenden Tabelle gezeigt, auf ein Stahl-/Eisensubstrat aufgetragen. Verwendet wurde dabei Schwarzstahl (15 x 20 cm), welcher zuvor SA 2 ½ mit einer Rauheit von ca. 50 µm gestrahlt wurde. Anschließend wurden die Haftungs-, Trocknungs- und Dehnungseigenschaften der finalen Beschichtung bestimmt:

| | | | |
|---|---|---|---|
| **Mischungsverhältnis:** | 100:20 | --- | --- |
| **Überarbeitung** | Mit einem PUR-Decklack erforderlich | Einschichtverfahren möglich | Einschichtverfahren möglich |
| **Haftung auf SA 2 ½ gestrahltem Schwarzstahl, 50 µm Rauheit vor Salznebelbeslastung 1440 h** | 8,5 MPa | 9,7 MPa | 8,7 MPa |
| | 100% | 100% | 100% |
| | Kohäsionsbruch im Beschichtungsstoff | Adhäsionsbruch zwischen Stahl und Beschichtungsstoff | Kohäsionsbruch im Beschichtungsstoff |
| **Haftung auf SA 2 ½ gestrahltem** | 7,9 MPa | Kompletter | 7,5 MPa |
| | 90% | Haftungsverlust der | 100 % |
| **Schwarzstahl, 50 µm Rauheit nach Salznebelbeslastung 1440 h** | Kohäsionsbruch Grundierung, 10% Adhäsionsbruch zum Substrat | Beschichtung vom Substrat | Kohäsionsbruch in der Beschichtung |
| **Bruchdehnung %** | 4,1 % | 8,6 % | 5,3 % |
| **Zugspannung bei Bruch** | 612 N/mm² | 394 N/mm² | 589 N/mm² |
| **Trocknung** | Mind. 4 h | Nach 4 Stunden mech. belastbar | Nach 1,5 h mech. belastbar |

Bestimmung der Haftung nach DIN EN ISO 4624. Dabei wird die zu prüfende Oberfläche angeraut. Anschließend wird ein Stempel definierter Fläche aufgeklebt und nach 24 h Härtung von der Oberfläche abgezogen. Anschließend wird die Haftung in MPa und Bruchbild angegeben.

Bestimmung des Blasengrades, Postgrades, Kreidung und Unterrostung am Ritz und Haftung nach Auslagerung nach DIN EN 12944.

Bestimmung der Bruchdehnung [%] und Zugspannung beim Bruch in Anlehnung an DIN 53504, Probentyp: nach DIN EN ISO 527-2, Typ 1A, Prüfgeschwindigkeit 200 mm/min, Raumtemperatur.

Bestimmung der Trocknung nach DIN 53150.

Bei der Lackierung von Stahlbauwerken (das betrifft die Neu- wie auch insbesondere die Unterhaltslackierung im Service) kommt der relativen Luftfeuchtigkeit bei den Beschichtungsvorgängen eine besondere Bedeutung zu. Zumeist werden die Bauwerke durch Strahlverfahren partiell oder komplett von der Altbeschichtung befreit. Hier ist bei heute üblichen Beschichtungen allerdings darauf zu achten, dass der sogenannte Taupunkt nach dem Strahlen nicht unterschritten wird und sich so ein Feuchtigkeitsfilm auf der zu lackierenden Oberfläche bildet. Dieser Feuchtigkeitsfilm führt einerseits zu einer Flugrostbildung, welche haftungsmindernd wirken kann. Wesentlicher ist jedoch die mögliche Reaktion mit Komponenten aus dem Beschichtungsstoff, die zu einer sogenannten *"weak boundary layer"* führt. Diese Schicht ist derart porös, dass sie zu einer Sollbruchstelle werden kann und besonders korrosionsanfällig ist.

In der Regel wird als Standard für einen mittleren Korrosionsschutz ein Zweischichtverfahren aus einer Epoxid-Grundierung und einem Polyurethan-Decklack gewählt. Für höchste Ansprüche wird u.a. noch auf Zinkstaubgrundierungen und/oder Eisenglimmer-Zwischen- bzw. Deckschichten zurückgegriffen.

Durch die Verwendung einer erfindungsgemäßen Beschichtungszusammensetzung auf Basis eines Silanurethan-Bindemittels, wird der mögliche Wasserfilm im Taupunktbereich reaktiv in die Lackschicht eingebaut und dient so der Reaktion und der Haftung zum Substrat. Entsprechend ist die Verarbeitungstoleranz des Produktes auch bei Veränderungen der Umgebungsbedingungen außerordentlich hoch. Insbesondere kommt es mit dem erfindungsgemäßen System nicht zu der Entstehung einer *weak boundary layer.* Darüber hinaus wird, durch den hohen Vernetzungsgrad in der erfindungsgemäßen Beschichtungszusammensetzung und der Ausbildung einer wasserabweisenden Wirkung noch im frischen Zustand der Wassereintritt deutlich minimiert, so dass die Korrosionsbeständigkeit weiter steigt. Daher können die erfindungsgemäßen Beschichtungszusammensetzungen auch im Einschichtverfahren verwendet werden (in DTM, Direct To Metal-Verfahren).

Die erfindungsgemäßen Zusammensetzungen können zum Beispiel im Bereich des Rohrleitungsbaus, z. B. für Pipelines, verwendet werden.

### Beispiel 4: Einbrennmaterialien für die Bandstahllackierung oder dekorative Lackierung von Aluminiumfelgen.

Die hierin beschriebenen Beschichtungsmittel lassen sich auch als Einbrennmaterialien für die Bandstahllackierung oder dekorative Lackierung von Aluminiumfelgen umformulieren. Es wurden hierfür erfindungsgemäße Zusammensetzungen formuliert, die bei erhöhten Temperaturen aushärten. Dabei fanden, wie auch an anderer Stelle hierin beschrieben, als Rohstoffe die Produkte Geniosil® XT50 der Firma Wacker und Vestanat® EP-MF 95 sowie EP-MF 201 der Firma Evonik Anwendung, die ein Molekulargewicht von 500 bis 800 g/mol bzw. 300 bis 500 g/mol aufweisen. Es lassen sich mit diesen Rohstoffen sowohl unpigmentierte als auch pigmentierte Beschichtungen erzeugen. Allen verwendeten Rohstoffen ist gemein, dass sie einen Festkörperanteil von bis zu 100% aufweisen, sowie formaldehyd- und xylolfrei formuliert sind. Die erfindungsgemäßen Beschichtungsformulierungen aus silanurethanisierten Präpolymeren wurden mit derzeit üblichen Einbrennmaterialien für die Bandstahllackierung verglichen.

Die verschiedenen Beschichtungszusammensetzungen setzten sich zusammen, wie in der folgenden Tabelle gezeigt.

| **Rohstoffe** | **Stand. Melaminharz -Lack***** | **Silanurethan-Beschichtungsstoff HF 165***** | **Silanurethan-Beschichtungsstoff HF 85/4-4***** | **Silanurethan-Beschichtungsstoff HF 85/4-4-2***** | **Silanurethan-Beschichtungsstoff HF 4-5***** |
|---|---|---|---|---|---|
| Hydroxlgruppen-haltiges Acrylatharz | 36,00 | --- | --- | --- | --- |
| Silanurethan-Präpolymer A (Geniosil®XT 50 (Wacker)) | --- | --- | 28,50 | 24,50 | 33,00 |
| Silanurethan-Präpolymer B1 (Vestanat® EP-MF 201 (Evonik)) | --- | 23,00 | 28,50 | 24,50 | 16,50 |
| Silanurethan-Präpolymer B2 (Vestanat® EP-MF 95 (Evonik)) | --- | 60,00 | 21,60 | 18,40 | 41,40 |
| Aminosilan | --- | --- | 15,00 | 12,80 | 1,00 |
| Additive* | 4,40 | 4,40 | 2,80 | 2,40 | 3,60 |
| Organisches Wachs | 1,00 | 1,00 | --- | --- | --- |
| Organisches Mattierungsmittel | 11,20 | 11,20 | --- | --- | --- |
| Silikatisches Mattierungsmittel | | --- | 3,20 | 4,60 | 4,10 |
| Melaminharz | 28,10 | --- | --- | --- | --- |
| Katalysatoren | --- | 0,40 | 0,40 | 0,40 | 0,40 |
| Org. Vernetzer | --- | --- | --- | 12,40 | --- |
| Lösemittelpaket** | 19,40 | --- | --- | --- | --- |
| **Gesamt** | 100,00 | 100,00 | 100,00 | 100,00 | 100,00 |

| | | | | | |
|---|---|---|---|---|---|
| * Entschäumer, Dispergieradditiv, Lichtschutzadditiv, Verlaufsadditiv ** Methoxypropylacetat, Solvent Naphta *** transparent | | | | | |

Bei der Beschichtung HF 85/4-5 wurde eine organische Vernetzungskomponente als Komponente B im Mischungsverhältnis 10:1 hinzugegeben (hier Desmodur N 3600). Die Verwendung von org. Vernetzern (intern, wie auch als Komp. B) kann die Beschichtungen hinsichtlich bestimmter Verarbeitungsparameter, Trocknungseigenschaften oder physikalischer Eigenschaften beeinflussen. HF 85/4-4 weist schon eine hervorragende Kratzfestigkeit auf, durch die Verwendung eines blockierten Isocyanates (hier Desmodur PL 350 MPA) konnte diese nochmals gesteigert werden.

Die Beschichtungszusammensetzungen wurden, wie in der folgenden Tabelle gezeigt, auf einem Stahlsubstrat eingebrannt (Stahlsubstrat Gardobond 26S/6800/OC, zinkphosphatiert, der Firma Chemmetall, vorlackiert mit einem Standard-Basecoat, Bergolin Ultra-HS-Basecoat 6P707, Audisportsilber, Schichtdicke ca. 25 µm). Anschließend wurden die Haftungs- und Kocheigenschaften und die Chemikalienbeständigkeit der finalen Beschichtung bestimmt.

Alle verwendeten Präpolymere wiesen trotz des 100% igen Festkörperanteils sehr niedrige Viskositäten auf, so dass die Zusammensetzungen in sehr dünnen Schichten von 10 bis 100 µm aufgetragen werden konnten. Darüber hinaus war es auf Grund der niedrigen Viskositäten möglich, die Zusammensetzungen über die üblichen Verfahren wie Scheiben, Glocken oder Sprühverfahren zu verarbeiten. Vorteilhafterweise werden während der Einbrennphase deutlich weniger VOC frei als bei den getesten herkömmlichen Melaminharz-Lacken. Eine Nachbehandlung von VOC in entsprechenden Abgasreinigungsanlagen ist somit nur in sehr eingeschränktem Umfang nötig.

Der Vergleich erfolgt zu einem Standard-Einbrennlack, der für die Felgenlackierung und in dünnen Schichten (bis ca. 50 µm) auch für die Bandstahllackierung geeignet ist (vgl. folgende Tabelle).

| Prüfung | **Standard Melaminharz-Lack transparent** | **Standard Melaminharz-Lack transparent** | **Silanurethan-Beschichtungsstoff HF 165 transparent** | **Silanurethan-Beschichtungsstoff HF 85/4-4 transparent** | **Silanurethan-Beschichtungsstoff HF 85/4-4-2 transparent** | **Silanurethan-Beschichtungsstoff HF 4-5 transparent** |
|---|---|---|---|---|---|---|
| Ablüftzeit und -temperatur [min, °C] | 15, 40 | 15, 40 | 15, 40 | 15, 40 | 15, 40 | 15, 40 |
| Einbrennzeit und - temperatur [min, °C] | 15, 160 | 15, **200** | 15, 160 | 15, 160 | 15, 160 | 100 |
| Auslaufzeit [s] | 22 | 22 | 35 | 35 | 35 | 33 |
| Lackierte Schichtdicke [µm] | 150 | 150 | 150 | 150 | 150 | 150 |
| Haftung Gitterschnitt, DIN EN ISO 2409, 2 mm | Gt0 | Gt2 | Gt0 | Gt0 | Gt0 | Gt0 |
| Kochtest 20 min, 100 °C | i.O. | i.O. | i.O. | i.O. | i.O. | i.O. |
| Kratztest | | | | | | |
| Chemikalienbeständigkeit Einwirkzeit 15 min bei 60°C | | | | | | |
| Vogelkot | i.O. | i.O. | i.O. | i.O. | i.O. | i.O. |
| Baumharz | i.O. | i.O. | i.O. | i.O. | i.O. | i.O. |
| 5% H₂SO₄ | **n.i.O.** | **n.i.O.** | **i.O.** | **i.O.** | **i.O.** | **i.O.** |
| 50% H₂SO₄ | n.i.O. | n.i.O. | n.i.O. | i.O. | i.O. | i.O. |

Überraschenderweise konnten die Einbrenntemperaturen für die erfindungsgemäßen Beschichtungszusammensetzungen deutlich, d. h. um einen Faktor von mehr als 2, reduziert werden. Während sowohl bei den Melamin-basierten, als auch bei den Isocyanat-10 basierten Materialien in der Regel Temperaturen von ca. 180°C bis 240°C notwendig sind, konnte die Einbrenntemperatur für die erfindungsgemäßen Zusammensetzungen zur Ausbildung der gleichen Schutzeigenschaften auf 80-100 °C reduziert werden. Es war ferner erkennbar, dass die erfindungsgemäßen Zusammensetzungen gegenüber den Standard-Melaminharz-Lacken eine deutlich verbesserte Chemikalienbeständigkeit aufwiesen. Diese ist voraussichtlich auf eine sehr hohe Vernetzungsdichte zurückzuführen, die beim Aushärten des Silanurethan-basierten Beschichtungsstoffes entsteht. Auch im Klarlackbereich ist somit eine ausreichende Chemikalienbeständigkeit gegenüber Vogelkot, Baumharz, konzentrierten Säuren und Laugen sichergestellt.

Schließlich hat sich gezeigt, dass die Anwesenheit eines Präpolymers A mit einem Molekulargewicht von 500 bis 800 g/mol diese Chemikalienresistenz nochmals entscheidend verbessert. Während eine Zusammensetzung, welche die Präpolymere B1 und B2 umfasst, bereits eine relativ gute Chemikalienresistenz aufweist, zeigen Zusammensetzungen, die auch das Präpolymer A umfassen, eine noch weiter verbesserte Resistenz gegen 50% H₂SO₄.

### Beispiel 5: Beschichtung von Faserverbundwerkstoffen, wie GFK- und CFK, z. B. im Windenergie-, Fahrzeugbau- und Architekturbereich

Die hierin beschriebenen Beschichtungsmittel lassen sich auch zur Beschichtung von Faserverbundwerkstoffen einsetzen. Die Beschichtungsformulierungen waren wie folgt:

| **Rohstoffe** | **VP 65/10 Einschichtlack (Gelcoat-Decklack)** | **VP 65/10-3 Inmould-Gelcoat transparent** |
|---|---|---|
| Silanurethan-Präpolymer A | 55,80 | 55,80 |
| Silanurethan-Präpolymer B | 10,00 | 10,00 |
| Amidbasiertes Thixotropierungsmittel | 0,80 | 0,80 |
| Additive: Entschäumer, Dispergieradditiv Lichtschutzadditiv Verlaufsadditiv | 3,80 | 3,80 |
| Aminosilan | 1,40 | 1,40 |
| Pigment Titandioxid | 14,50 | --- |
| Füllstoff Bariumsulfat | 8,00 | 27,70 |
| Silikatisches Mattierungsmittel | 3,00 | --- |
| Füllstoff Talkum | 2,20 | --- |
| Katalysatoren | 0,50 | 0,50 |
| **Gesamt** | 100 | 100 |

Es bestand die Möglichkeit, die Beschichtungsmaterialien sowohl transparent als auch pigmentiert zu verarbeiten. Aufgrund der Möglichkeit, die Zusammensetzungen in Schichtdicken von 80 µm bis zu 400 µm zu verarbeiten, taten sich unterschiedliche Verwendungsmöglichkeiten auf. Bei Schichtdicken ab ca. 300 µm spricht man von einem Gelcoat, darunter von Decklacken. Die Zusammensetzungen ließen sich mittels einer Rolle oder Spritzapplikation verarbeiten und somit als nachträgliche Schicht auf das fertig vorbehandelte Rotorblatt aufbringen. Auch in der sog. Inmould- Anwendung ließen sich die Zusammensetzungen vor dem Einbringen des Trägermaterials in die formgebende Einheit einbringen.

Überraschenderweise wurde, wie schon bei der Betonturmbeschichtung, festgestellt, dass trotz eines Festkörperanteils der Beschichtung von nahezu 100% ein Glanz von < 30 Einheiten (nach DIN EN ISO 2409, 60° Messwinkel) eingestellt werden konnte. Dies ist typischerweise bei 100% Festkörper-Beschichtungsstoffen nicht mehr möglich, da das dafür verwendete Mattierungsmittel (organisch oder anorganisch) ein verdunstendes Lösungsmittel als Transportmedium in die Grenzfläche (Beschichtungsstoff/Luft) benötigt.

Es sind somit mittels der Zusammensetzungen bei der Beschichtung von z. B. Rotorblättern von Windenergieanlagen Einschichtaufbauten möglich.

Die Prüfsubstrate wurden wie folgt hergestellt:

**Als nachträgliche Schicht:**

| **Material** | |
|---|---|
| **Infusionsharz** | MGS RIMR 035C |
| **Härter** | MGS RIMH 037 |
| **Glasfaser** | 1. Lage Biaxial 620 g/m² |
| | 2. - 8. Lage Triaxial 830 g/ m² |
| **Anzahl Lagen Glasfaser** | 8 Lagen |
| **Trennmittel** | Acmoscoat 82-9060 |

**Verarbeitung als Inmould-Gelcoat:**

| **Herstellungsbedingungen** | |
|---|---|
| **Applikationstemperatur des Inmouldgelcoats** | ca. 45°C |
| **Infusionstemperatur** | ca. 45°C |
| **Dauer und Temperatur Tempern** | ca. 15 Std. 90-95°C |

Herstellbedingungen bei Verarbeitung als Gelcoat im Rollverfahren:
a) Anschleifen des Substrates mittels Schleifpapier der Körnung 80 µm
b) Aufrollen des Gelcoats mit einer Schichtdicke von ca. 200-300 µm

Im Vergleich dazu wurde ein Standard-Beschichtungsaufbau aus dem Bereich Windenergie, enthaltend einen Inmould-Gelcoat, Spachtel, Porenfüller und Decklack, geprüft.

Die Aushärtezeit vor den Prüfungen betrug 7 Tage bei Raumtemperatur.

| **Prüfung** | **Standard 2K-PUR-Beschichtungsaufb au [Referenz]** | **VP 65/10 Einschichtlack (Gelcoat-Decklack)** | **VP 65/10-3 Inmould- Gelcoat transparent** |
|---|---|---|---|
| Verarbeitungsbedingungen: Temperatur [°C]: rel. Luftfeuchtigkeit [%]: | 20 - 35°C bis max. 75 % rel. Luftfeuchtigkeit | Ab 5°C möglich; bis >90 % Luftfeuchtigkeit | ab 35° Oberflächentemperatur der Form; bis 90 % Luftfeuchtigkeit |
| Prozesszeit gesamt [h] | 6-8 h | 6 h | 6 h |
| Glanz [60°] | < 30 über Decklack | < 30 | < 30 |
| Flexibilität Decklack* | 2 mm | 2 mm | 2 mm |
| Haftung System auf GFK [MPa]: | 7,8 mit 100% Kohäsionsbruch im Spachtel | 8,5 mit 70% Kohäsionsbruch | 8,4 mit 70% Kohäsionsbruch |
| Haftung [MPa] nach 1000 h Kondenswasserkonstantklima | 6,5 mit 80% Kohäsionsbruch im Spachtel, keine Blasen oder Rissbildung, kein Kreiden oder Abblättern | 6,1 mit 60% Kohäsionsbruch im Gelcoat, keine Blasen oder Rissbildung, kein Kreiden oder Abblättern | 7,9 mit 60% Kohäsionsbruch im Gelcoat, keine Blasen oder Rissbildung, kein Kreiden oder Abblättern |
| Haftung nach 3000 h QUV-B | 8,1 mit 70% Kohäsionsbruch im Spachtel, keine Blasen oder Rissbildung, kein Kreiden oder Abblättern Glanzhaltung 80% Farbtonabweichung DE=0,7 | 7,9 mit 70% Kohäsionsbruch im Gelcoat, keine Blasen oder Rissbildung, kein Kreiden oder Abblättern Glanzhaltung 80% Farbtonabweichung DE=0,5 | 5,1 mit 100% Kohäsionsbruch im Substrat, keine Blasen oder Rissbildung, kein Kreiden oder Abblättern Glanzhaltung 80% Farbtonabweichung DE=1,5 Durchscheinendes Substrat zeigt starke Farbtonveränderung |

| | | | |
|---|---|---|---|
| * mittels Dornbiegeprüfung, zylindrischer Dorn, DIN EN ISO 1519 [mm] bei 23°C | | | |

Gerade für Beschichtungen im Reparatur- und Servicebereich war das für die Reparaturen geeignete Zeitfenster im Jahr, bedingt durch die Umgebungsbedingungen, sehr kurz und reduzierte sich nochmals im Bereich der Offshore-Anwendungen. Die oben geschilderten, erfindungsgemäßen Formulierungsbeispiele des Einkomponenten-Beschichtungsmaterials als rollfähige Deckschicht verlängern dieses Zeitfenster erheblich, da das Material nahezu wetterunabhängig verarbeitet werden konnte. Überraschenderweise konnten die Zusammensetzungen teilweise bereits ab 5°C verarbeitet werden. Besonders vorteilhaft war die Möglichkeit, auch noch auf restfeuchten Untergründen zu arbeiten, da das dort befindliche Wasser die Reaktion der erfindungsgemäßen Zusammensetzung mit dem Beschichtungsmaterial sogar fördert. Bedingt durch den Beschichtungsprozess, durch z. B. Rollen, wird das Wasser in den Beschichtungsstoff eingetragen und katalysiert die Aushärtungsreaktion. Diese Eigenschaft der erfindungsgemäßen Zusammensetzungen bietet insbesondere im OEM (Original Equipment Manufacturer = Erstausrüster) Bereich der Windenergie erhebliche Vorteile in der gesamten Prozessführung.

Bei der Verwendung von lösungsmittelhaltigen Lacken ist die Entstehung von VOC (flüchtigen organischen Verbindungen, *Volatile Organic Compounds*) ein großes Problem. Dazu kommt die Belastung (Luft) für die Mitarbeiter. Bei der Verwendung von Wasserlacken darf die Luftfeuchtigkeit nicht zu gering sein (Problematik des Trocknens mit vorgetrockneter Luft), da das Material dann zu schnell trocknet und nicht mehr vollends auf der Oberfläche spreiten kann (typisches Winterproblem, Heizungsluft). Die Luftfeuchtigkeit darf aber auch nicht zu hoch sein, da dass das Material dann nicht mehr oder zu langsam trocknet. Bei zu langsamen Trocknen kann es zu Kochern (blasenähnlichen Oberflächenstörungen durch im Lackfilm eingeschlossene Lösemittel) kommen, da der Isocyanathärter neben dem Polyol auch mit dem in der Oberfläche verbleibenden Wasser reagiert (hohe Luftfeuchtigkeit, Sommerphänomen oder in Subtropischer Umgebung); dabei kann von außen eine Wassersäule auf das Lackmaterial drücken, so dass das sich im Lack befindende Wasser nicht mehr oder nur noch sehr langsam entweichen kann.

Weiterhin ließen sich aus ein und demselben Material durch kluge Kombination mit Füll- und Hilfsstoffen Gelcoats, Grundierungen, Spachtel, Decklacke und Kantenschutzmaterialien herstellen (vgl. obige Beispiele). Die Decklacke zeigten beim anschließenden Härtungsprozess in der oben gezeigten Rohstoffmischung im ausgehärteten Zustand überraschenderweise eine Mattierung mit einem Glanz von <30 Einheiten. Dies ist bei vergleichbaren 100% Materialien aus EP-oder PUR-Basis nicht möglich. Diese herkömmlichen Materialien bleiben weiterhin uneingeschränkt glänzend.

### Beispiel 6: Druckimprägnierung von Holz- und Betonuntergründen am Beispiel der Bahnschwellenbeschichtung

Holzuntergründe werden auf die unterschiedlichsten Arten und mit den unterschiedlichsten Materialien nachbehandelt. Die Holzschutzverfahren dienen dazu, das Holz vorbeugend gegen holzzerstörende oder holzverfärbende Organismen zu schützen. Das Ziel des modernen Holzschutzes ist das Sichern einer gleichmäßigen und hohen Eindringtiefe des Holzschutzmittels. Die meistgebrauchten Verfahren sind dabei die Kesseldruck- und die Kesselvakuumdruckimprägnierung. Die Tränkbarkeit ist von Holzart zu Holzart sehr unterschiedlich. Am besten eignen sich Buche und Eiche. Die erfindungsgemäßen Zusammensetzungen ließen sich auch für diese Verfahren einsetzen.

**Beschichtungsformulierungen:**

| **Rohstoffe** | **Silanurethan-Beschichtungsstoff HF 65** | **Silanurethan-Beschichtungsstoff HF 65/1** | **Silanurethan-Beschichtungsstoff HF 65/2** | **Silanurethan-Beschichtungsstoff HF 65/3** |
|---|---|---|---|---|
| Silanurethan-Präpolymer A | 95,00 | 80,00 | 65,00 | 50,00 |
| Silanurethan-Präpolymer B1 | --- | 15,00 | --- | 45,00 |
| Silanurethan-Präpolymer B2 | --- | --- | 30,00 | --- |
| Additive: Entschäumer, Dispergieradditiv Lichtschutzadditiv Verlaufsadditiv | 2,50 | 2,50 | 2,50 | 2,50 |
| Aminosilan | 2,00 | 2,00 | 2,00 | 2,00 |
| Katalysatoren | 0,50 | 0,50 | 0,50 | 0,50 |
| **Gesamt:** | 100,00 | 100,00 | 100,00 | 100,00 |

Für die Versuche wurden Abschnitte einer Original-Bahnschwelle aus Buchen-Kernholz einseitig in die oben benannten Beschichtungen über 2 Stunden getaucht (druckloses Beschichten) und anschließend bei Raumtemperatur für 7 Tage ausgehärtet. Die gleiche Vorgehensweise wurde an Prüfkörpern durchgeführt, die zuvor für 30 min im Kondenswasserkonstantklima nach DIN EN ISO 6270 CH bei 40°C und 98% Luftfeuchtigkeit gelagert wurden. Damit wurde ein erhöhter Restfeuchtegehalt des Holzes von ca. 40% simuliert.

Anschließend wurde die Penetrationstiefe durch Bestimmung der Eindringtiefe mittels eines Messschiebers gemessen. Weiterhin wurde ein Kochtest an weiteren Abschnitten durchgeführt, an denen bedingt durch mögliche unterschiedliche Ausdehnungen und mögliche rückseitige Wasserpenetration in den Holzwerkstoff Spannungen zwischen Substrat und Beschichtung auftreten können. Solche Spannungen würden sich durch Risse im Werkstoff zeigen.

| Prüfung | **Silanurethan-Beschichtungsstoff HF 65** | **Silanurethan-Beschichtungsstoff HF 65/1** | **Silanurethan-Beschichtungsstoff HF 65/2** | **Silanurethan-Beschichtungsstoff HF 65/3** |
|---|---|---|---|---|
| Auslaufzeit [s] | 45 | 35 | 39 | 25 |
| Penetrationstiefe [mm] drucklos, bei RT | 1,50 | 2,30 | 1,50 | 1,70 |
| Haftung Gitterschnitt, DIN EN ISO 2409, 2 mm | Gt0 | Gt0 | Gt0 | Gt0 |
| Kochtest 20 min, 100 °C | i.O. | i.O. | i.O. | i.O. |
| Penetrationstiefe [mm], drucklos bei RT und wassergeträn ktes Substrat | 1,20 | 2,30 | 0,90 | 1,80 |

Üblicherweise werden Holzbahnschwellen mittels einer Tauchimprägnierung behandelt, d.h. mittels Kesseldruck oder Vakuumkesseldruckimprägnierung mit Anthracenölhaltigem Konservierungsmittel (Kreosol). Aufgrund der Gesundheitsgefahr und Umweltgefährdung dürfen diese Mittel jedoch nur noch bis 2019 verwendet werden, mit einer Ausnahmegenehmigung ggf. bis 2023. Da es keine anderen Stoffe gleichwertiger Haltbarkeit gibt, müssen Alternativen gefunden werden.

Eine Alternative wäre das Beschichten der gesamten Holz- oder Betonschwelle mit einem höchstflexiblen Polyurethanmaterial (Steodur VS 84 oder der oben bereits beschriebenen Schicht aus VP 65/10). Nachteilig sind dabei jedoch die hohe Schichtdicke und bei hohen Punktbelastungen im Schotterbett auftretende Risse, sowie ein Mangel an Möglichkeiten z. B. nachträglich eingebrachte Bohrungen und Schichtverletzungen zu reparieren. Solche Reparaturen sind aufwendig, da Wasser in das unter der Schicht liegende, ungeschützte Holz eindringen und es in der Folge zu Fäulnisprozessen kommen kann.

Ein Vorteil von Penetrationsbeschichtungen besteht darin, dass mögliche Fehlerstellen des Substrates (im Bereich von Ästen etc.) durch das Eindringen des Beschichtungsstoffes fixiert werden und damit keine großen Defekte entstehen und sich bestehende Defekte nicht ausweiten können.

Bei Betonschwellen wird derzeit auf eine Beschichtung verzichtet. Jedoch besteht auch hier die Möglichkeit, dass Wasser, welches in die Poren eindringt, im Frost-Tauwechsel die Schwelle zum Bersten bringen kann (siehe Betonbeschichtungen).

Ein weiteres Problem derzeit verwendeter Verfahren ist der sehr aufwendige Lackierprozess, der für einen Hochdurchsatzprozess nur ungenügend ist.

### Erfindungsgemäßer Lösungsweg:

Die oben dargestellten Formulierungsbeispiele weisen eine zu den Anthracenölen vergleichbare Viskosität auf. Weiterhin weisen die Zusammensetzungen schon bei der drucklosen Verarbeitung über entsprechende Tränkverfahren ein hervorragendes Penetrationsverhalten auf. Überraschenderweise konnte sogar Holz verarbeitet werden, dessen Holzfeuchte bei 40% lag (eine Holzfeuchte von < 30% ist üblich). Es besteht somit erfindungsgemäß die Möglichkeit, die Bahnschwellen bereits mit einem drucklosen Verfahren erfolgreich zu schützen. Dennoch kann auch in einem erfindungsgemäßen Verfahren Druck verwendet werden, um die Eindringtiefe des Beschichtungsmaterials nochmals deutlich zu erhöhen und dadurch auch die Schutzeigenschaften zu vervielfachen. Das Beschichtungsmaterial drang in einem solchen Druckverfahren gleichmäßig in das Holz ein und verband sich durch die anschließende Kondensationsreaktion, die durch die Restfeuchte des Holzes oder der Betonschwelle katalysiert wird, zu einem Polymer. Die Beschichtungsstoffformulierung kann so aufgebaut werden, dass die Flexibilität der Beschichtung der Flexibilität des Holzes ähnelt. Auf diese Weise werden vorteilhaft die flexiblen Eigenschaften des Holzes erhalten, während die Poren durch das Polymer verschlossen werden und das Eindringen von Wasser und holzzersetzenden Bakterien, Pilzen und Tieren aktiv verhindert wird. Eine Verwendung von toxischen Stoffen, wie Algiziden, Herbiziden, Fungiziden und anderen Bioziden ist nicht erforderlich. Ferner wird durch den Erhalt der flexiblen Eigenschaften des Holzes die Gefahr, dass Steine aus dem Schotterbett das Holz- und/oder Betonmaterial druckinduziert durchstoßen, deutlich minimiert.

Alternativ besteht bei sehr hohen Lastaufkommen die Möglichkeit der Kombination der Druckimprägnierung mittels des oben beschriebenen erfindungsgemäßen Beschichtungsmaterials mit der ebenfalls beschriebenen höchstflexiblen Polyurethanbeschichtung (Steodur VS 84) oder der zuvor beschriebenen Deckschicht aus VP 65/10. Hier dienen diese als reine Deckschicht und stellen einen physikalischen Puffer zwischen der eigentlichen Bahnschwelle und dem Schotterbett dar. Sofern diese Schicht beschädigt werden würde, kämen dennoch die Schutzeigenschaften der Penetrationsbeschichtung zum Tragen. Natürlich ist dem Fachmann bewusst, dass diese Eigenschaften ebenfalls durch das Aufbringen einer zusätzlichen Schicht aus einem flexiblen Epoxidharz, Polysiloxandichtstoff oder Ähnlichem realisiert werden könnte.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Feuchtigkeitshärtende Zusammensetzung, umfassend mindestens zwei unterschiedliche Polyurethan-Präpolymere A und B mit jeweils mindestens zwei silanfunktionellen Endgruppen, wobei das Präpolymer A ein durchschnittliches Molekulargewicht von 200 bis 2500 g/mol aufweist und das Präpolymer B ein durchschnittliches Molekulargewicht von 200 bis 1500 g/mol aufweist.

2. Feuchtigkeitshärtende Zusammensetzung nach Anspruch 1, wobei das Präpolymer A und das Präpolymer B Endgruppen der Formel (I)
-X-CH₂-Si-(O-R¹)₃ (I)
aufweisen, wobei
X für -NH-CO-NH-, -NH-CO-S- oder-NH-CO-O- steht; und
R¹ für eine Ethyl- oder Methylgruppe steht.

3. Feuchtigkeitshärtende Zusammensetzung nach einem der vorangehenden Ansprüche, wobei das Präpolymer A und das Präpolymer B die Formel (II)
(R₂-O)₃-Si-CH₂-X-R³-X- CH₂-Si-(O-R¹)₃ (II)
aufweisen, wobei jeweils
X für -NH-CO-NH-, -NH-CO-S- oder -NH-CO-O- steht;
R¹ und R² unabhängig voneinander für eine Ethyl- oder Methylgruppe stehen;
R³ eine polymere Verbindung ist, vorzugsweise ein Polyether, Polyester, Polycaprolacton, Polycarbonatdiol, Polyamin, Polythiol, Carbonsäure, Epoxid, ungesättigter Polyester, eine UV reaktive Komponente oder eine polymere Verbindung, die eine solche Verbindung umfasst.

4. Feuchtigkeitshärtende Zusammensetzung nach einem der vorangehenden Ansprüche, wobei das Präpolymer A ein durchschnittliches Molekulargewicht von 300 g/mol bis 1500 g/mol aufweist und das Präpolymer B ein durchschnittliches Molekulargewicht von 300 g/mol bis 1000 g/mol aufweist.

5. Feuchtigkeitshärtende Zusammensetzung nach einem der vorangehenden Ansprüche, wobei das Präpolymer A ein durchschnittliches Molekulargewicht von 500 g/mol bis 800 g/mol aufweist und das Präpolymer B ein durchschnittliches Molekulargewicht von 300 g/mol bis 500 g/mol aufweist.

6. Feuchtigkeitshärtende Zusammensetzung nach einem der vorangehenden Ansprüche, wobei das Präpolymer A ein Polyether ist.

7. Feuchtigkeitshärtende Zusammensetzung nach einem der vorangehenden Ansprüche, wobei die Zusammensetzung kein Lösungsmittel enthält.

8. Feuchtigkeitshärtende Zusammensetzung nach einem der vorangehenden Ansprüche, wobei die Zusammensetzung einen Festkörperanteil von 95% oder mehr, vorzugsweise 98% oder mehr, hat.

9. Verwendung der Zusammensetzung nach einem der Ansprüche 1 bis 8 als Einkomponentensystem, insbesondere als einkomponentiges Beschichtungssystem.

10. Beschichteter Formkörper herstellbar durch Auftragen der Zusammensetzung nach einem der Ansprüche 1 bis 10 auf ein Substrat und Aushärtenlassen der Zusammensetzung mit Feuchtigkeit, wobei das Substrat ein Holz-, Beton-, Stahl- oder Eisensubstrat ist.

11. Verfahren zur Herstellung eines beschichteten Formkörpers, Schritte umfassend, bei denen man
a) eine Schicht der Zusammensetzung nach einem der Ansprüche 1 bis 8 auf ein feuchtes Substrat aufträgt oder auf ein Substrat bei einer Umgebungs-Luftfeuchtigkeit von mindestens 5% aufträgt; und
b) die Schicht aushärten lässt.
